Europäisches Patentamt

European Patent Office

Office européen des brevets

(19)

(11) Numéro de publication : **0 407 281 B1**

(12) **FASCICULE DE BREVET EUROPEEN**

(45) Date de publication du fascicule du brevet :
20.01.93 Bulletin 93/03

(51) Int. Cl.⁵ : **G05D 3/14, G05B 19/35**

(21) Numéro de dépôt : **90401897.5**

(22) Date de dépôt : **29.06.90**

(54) **Système d'alimentation simplifiée des potentiomètres dans la mémorisation électronique des sièges automobiles et autres.**

(30) Priorité : **04.07.89 FR 8908952**

(43) Date de publication de la demande :
**09.01.91 Bulletin 91/02**

(45) Mention de la délivrance du brevet :
**20.01.93 Bulletin 93/03**

(84) Etats contractants désignés :
**AT BE DE DK ES GB IT NL SE**

(56) Documents cités :
EP-A- 0 001 297
DE-A- 2 754 689
DE-A- 3 207 068
FR-A- 2 512 567
FR-A- 2 592 970
US-A- 4 682 088

(73) Titulaire : **ETS. COUSIN FRERES**
**Le Bois de Flers**
**F-61103 Flers Cédex (FR)**

(72) Inventeur : **Droulon, Georges**
**Rue de la Garenne, St. Georges des**
**Groseillers**
**F-61100 Flers (FR)**
Inventeur : **Leroy, Yannick**
**95 rue de la Boule**
**F-61100 Flers (FR)**
Inventeur : **Lhomer, Philippe**
**24 Impasse de la Vère**
**F-61100 St Georges des Groseillers (FR)**

(74) Mandataire : **Madeuf, Claude Alexandre Jean**
**et al**
**CABINET MADEUF 3, avenue Bugeaud**
**F-75116 Paris (FR)**

EP 0 407 281 B1

## Description

La présente invention concerne un système d'alimentation simplifié du potentiomètre de repérage de position des mécanismes de mémorisation électroniques du réglage de la position des sièges de véhicules automobiles et autres objets analogues.

A l'heure actuelle, chaque mécanisme de mémorisation électronique de réglage de sièges est relié par un faisceau de cinq fils à un module électronique interne ou externe au siège.

En effet, deux fils sont respectivement reliés aux bornes du moteur de réglage du mécanisme considéré afin d'alimenter le moteur par la tension de la batterie, deux autres fils sont en outre respectivement reliés aux bornes du potentiomètre de repérage afin d'alimenter ce potentionmètre par une tension qui est en général une tension régulée de l'ordre de 5 volts, tandis qu'un cinquième fil relie le curseur du potentiomètre au module électronique, le signal correspondant à la position du curseur déterminant la position de réglage.

La présente invention vise à supprimer la liaison des deux fils d'alimentation du potentiomètre au module électronique en branchant directement ces deux fils en parallèle sur le moteur de réglage.

Du fait d'un tel montage, il est inutile de prévoir une alimentation distincte pour le potentiomètre qui n'est ainsi alimenté que si le moteur est lui-même sous tension.

Cependant, du fait qu'il y a lieu de commuter la polarité de la tension appliquée au moteur selon le sens de rotation imposé à celui-ci, le curseur du potentiomètre, qui est alimenté par la même tension que le moteur, ne fournit pas à l'électronique la même indication à chaque fois pour une position donnée du curseur.

Ainsi et à titre d'exemple, on considère une alimentation sous 12 volts et le curseur au 3/4 de sa course. Pour un sens de rotation du moteur, le signal issu curseur sera de 9 volts par rapport à la masse, tandis qu'il ne sera que de 3 volts pour la même position du curseur lorsqu'on aura inversé la polarité pour faire tourner le moteur en sens contraire. On voit donc que le programme de traitement des informations doit être prévu pour fournir le complément de tension (c'est-à-dire dans le cas actuel 9 volts au lieu de 3 volts) ou "complémenter" la valeur lue en fonction du sens de rotation.

En outre, la tension d'alimentation fournie à l'électronique par la source d'énergie électrique, c'est-à-dire la tension de la batterie du véhicule, peut varier dans des proportions importantes, par exemple selon la température ou le niveau plus ou moins élevé de la charge. On peut, à ce sujet, admettre qu'une batterie de 12 volts fournit en réalité une tension variant de 8 à 20 volts. On voit ainsi à titre d'exemple que pour un curseur à mi-course, le signal correspondant issu du curseur sera à 4,5 volts si la batterie fournit 9 volts, tandis que ce signal sera à 9 volts si la batterie fournit 18 volts. Par conséquent, la valeur du signal transmis au calculateur peut paraître aléatoire puisqu'elle ne fait pas nécessairement référence à la valeur mise en mémoire dans des conditions identiques.

Ainsi, pour une valeur donnée mise en mémoire, l'information appliquée au moteur sera variable et par conséquent le réglage du moteur correspondant variera.

La disposition proposée plus haut, consistant à brancher directement en parallèle sur le moteur de réglage les deux fils d'alimentation du potentiomètre, si elle réduit efficacement le nombre des fils et évite de prévoir une source de tension annexe, paraît par conséquent être a priori inapplicable.

La présente invention telle qu'elle est énoncée à la revendication principale permet néanmoins de rendre possible cette disposition.

Diverses autres caractéristiques de l'invention ressortent d'ailleurs de la description détaillée qui suit et sont énoncées à la revendication secondaire.

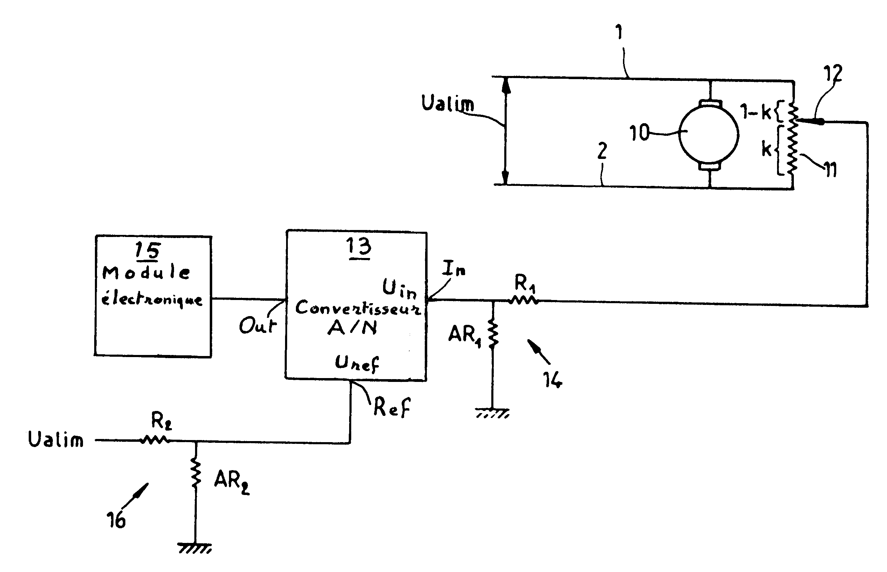

Une forme de réalisation de l'objet de l'invention est représentée, à titre d'exemple non limitatif, au dessin annexé .

La figure unique représente un schéma électronique du système d'alimentation selon l'invention.

Au dessin, on a représenté en 10 le moteur de réglage d'un mécanisme de type connu de mémorisation de la position d'un siège dont 11 représente le potentiomètre de répérage de position. Le curseur 12 détermine sur le potentiomètre 11 deux rapports potentiométrique, respectivement k et 1-k.

Conformément à l'invention, le potentiomètre 11 est placé aux bornes du moteur 10, et ce moteur est alimenté sous une tension $U_{alim}$ qui peut varier dans des proportions importantes et, par exemple de 8 à 20 volts lorsque $U_{alim}$ correspond à la tension fournie par une batterie de 12 volts, selon la température et le taux de charge de la batterie, comme mentionné plus haut.

Ainsi, le potentiomètre 11 n'est alimenté que si le moteur 10 est lui-même sous tension. On remarquera, à ce sujet, que si on appelle 1 et 2 les deux fils d'alimentation du moteur 10, le potentiel de 1 est positif ou négatif par rapport au potentiel de 2 selon le sens de rotation du moteur, ce sens de rotation variant selon une commutation correspondante de la polarité de $U_{alim}$.

Le curseur 12 du potentiomètre 11 est relié à l'entrée In d'un convertisseur analogique-numérique 13 par un pont diviseur 14 dont une résistance, de valeur $R_1$, est reliée au curseur 12 et dont l'autre résistance est reliée à la masse du système d'alimentation et a pour valeur $AR_1$, A étant le coefficient multiplicateur quelconque. Le convertisseur analogique-numérique 13 reçoit donc une tension $U_{in}$ déduite de la tension $U_{alim}$ et donc de valeur en général variable.

La sortie Out du convertisseur analogique-numérique 13 est reliée, de manière connue, à un module électronique 15 d'un type bien connu dans la technique des mécanismes de mémorisation électronique du réglage de la position de sièges. Le module électronique 15 est monté de manière interne ou externe au siège dont la position doit être réglée par le moteur 10.

On notera au dessin que, de manière non habituelle, le convertisseur analogique-numérique 13 est ici soumis à une tension de référence qui n'est pas fixe. En effet, l'entrée de référence Ref du convertisseur analogique-numérique 13 est reliée à la même alimentation $U_{alim}$ que celle du moteur, c'est-à-dire à une alimentation éventuellement variable, par un pont diviseur 16 dont une résistance de valeur $R_2$ est reliée à l'alimentation $U_{alim}$ et dont l'autre résistance est reliée à la masse et a pour valeur $AR_2$, A étant le même coefficient multiplicateur que pour le pont diviseur 14. Le convertisseur analogique-numérique 13 est ainsi soumis à la tension $U_{ref}$ déduite de la tension $U_{alim}$ et donc de valeur en général variable.

Comme on l'a vu plus haut, il y a lieu maintenant d'examiner deux cas selon le sens de rotation du moteur.

1er cas - Le potentiel de la ligne 1 est positif par rapport au potentiel de la ligne 2 (premier sens de rotation).

Le convertisseur analogique-numérique 13 effectue alors le rapport entre $U_{ref}$ et $U_{in}$ (en général, sur huit bits du fait du module électronique auquel il est relié), tel que :

$$\frac{U_{in}}{U_{ref}} = \frac{A \times k \times U_{alim}}{A \times U_{alim}} = k$$

2ème cas - Le potentiel de la ligne 2 est positif par rapport au potentiel de la ligne 1 (deuxième sens de rotation).

Le convertisseur effectue alors de même le rapport entre $U_{ref}$ et $U_{in}$, tel que :

$$\frac{U_{in}}{U_{ref}} = \frac{A \times U_{alim} \times (1-k)}{A \times U_{alim}} = 1 - k$$

On voit de ce qui précède que tant, dans le 1er que dans le 2ème cas, le rapport entre les tensions $U_{ref}$ et $U_{in}$ est indépendant de la tension d'alimentation $U_{alim}$ et ne dépend que de la position du curseur 12. Ce rapport est directement fonction de la précision du potentiomètre 11, et pour une position déterminée du curseur 12 correspondant à une valeur donnée mise en mémoire dans le module électronique 15, l'information appliquée au moteur 10 sera toujours la même et ne dépend pas de la source d'alimentation en tension variable $U_{alim}$.

Il est donc possible de mémoriser avec précision les positions de réglage du moteur 10 même si $U_{alim}$ varie.

Il faudra toutefois utiliser des résistances de précision pour les ponts diviseurs 14 et 16. Dans le cas où la tension est inversée, on devra seulement prendre le complément à 1 (soit en héxadécimal FF), ce que le module électronique 15 peut facilement effectuer après avoir été programmé en conséquence et de manière connue.

**Revendications**

1. Système d'alimentation simplifié de potentiomètre utilisable dans la mémorisation électronique de la position d'un moteur de réglage des sièges de véhicule d'automobile comprenant un potentiomètre de repérage (11) permettant de fixer une position de réglage, ce potentiomètre étant relié aux bornes d'un moteur (10) alimenté par une tension ($U_{alim}$) variable et commutable entre deux états de polarité inverse selon le sens de rotation dudit moteur, caractérisé en ce que le potentiomètre présente un curseur (12) relié par l'intermédiaire d'un premier pont diviseur (14) à l'entrée d'un convertisseur analogique/numérique (13) dont la sortie est reliée à un module électronique (15) et qui est soumis à une tension de référence reliée à ladite tension ($U_{alim}$) par l'intermédiaire d'un second pont diviseur (16), ledit premier pont diviseur (14) comprenant une première résistance (R1) reliée audit curseur (12) du potentiomètre (11) et une seconde résistance (AR1) reliée à la masse du système d'alimentation, le second pont diviseur (16) comprenant une troisième résistance (R2) reliée à la tension ($U_{alim}$) et une quatrième résistance (AR2) reliée à la masse du système d'alimentation, et la valeur de ladite seconde (AR1) et quatrième résistance (AR2) desdits premier et second ponts diviseurs (14, 16) étant égale au produit de la valeur des première (R1) et troisième (R2) résistances correspondantes multipliée par un même coefficient (A).

2. Système d'alimentation simplifié suivant la revendication 1, caractérisé en ce que le module électronique (15) est un module de mémorisation interne ou externe à un siège dont la position de réglage mémorisé est fournie par le moteur (10).

**Patentansprüche**

1. Vereinfachtes Stromversorgungssystem für Potentiometer zur Verwendung bei der elektronischen Speicherung der Stellung eines Motors zur Einstellung von Kraftfahrzeugsitzen, mit einem Markierungspotentiometer (11) zum Festlegen einer Einstellposition, wobei dieses Potentiometer mit den Anschlüssen eines Motors (10) verbunden ist, der von einer Spannung ($U_{alim}$) gespeist wird, die veränderbar ist und zwischen zwei inversen Polaritätszuständen je nach der Drehrichtung des Motors wechseln kann, **dadurch gekennzeichnet,** daß das Potentiometer einen Schleifer (12) aufweist, der über eine erste Teilerbrücke (14) mit dem Eingang eines Analog-Digital-Wandlers (13) verbunden ist, dessen Ausgang mit einem elektronischen Modul (15) verbunden ist und der an einer Referenzspannung liegt, welche mit der Spannung ($U_{alim}$) über eine zweite Teilerbrücke (16) verbunden ist, daß die erste Teilerbrücke (14) einen ersten Widerstand (R1) aufweist, der mit dem Schleifer (12) des Potentiometers (11) verbunden ist, sowie einen zweiten Widerstand (AR1), der an der Masse des Versorgungssystems liegt, daß die zweite Teilerbrücke (16) einen dritten Widerstand (R2) aufweist, der an der Spannung ($U_{Versorg}$) liegt, sowie einen vierten Widerstand (AR2), der an der Masse des Stromversorgungssystems liegt, und daß der Wert des zweiten (AR1) und vierten Widerstands (AR2) der ersten und zweiten Teilerbrücke ( 14, 16) gleich dem Wert des entsprechenden ersten (R1) und dritten (R2) Widerstands ist, jeweils multipliziert mit demselben Koeffizienten (A).

2. Vereinfachtes Versorgungssystem nach Anspruch 1, dadurch gekennzeichnet, daß das elektronische Modul (15) ein internes oder externes Speichermodul für einen Sitz ist, dessen gespeicherte Einstellposition von dem Motor ( 10) geliefert wird.

**Claims**

1. Simplified supplying system for potentiometer usable in the electronic memorisation of the position of a motor for setting automobile seats, comprising an identification potentiometer (11) enabling to fix a setting position, this potentiometer being connected to the terminals of a motor (10) supplied with a voltage ($U_{feed}$) which is variable and switchable between two reverse polarity states according to the rotation direction of said motor, characterized in that the potentiometer has a slider (12) connected via a first dividing bridge (14) to the input of an analog-digital converter (13) the output of which is connected to an electronic module (15) and which is subjected to a reference voltage connected to said voltage ($U_{feed}$) via a second dividing bridge (16), said first dividing bridge (14) including a first resistor ($R_1$) connected to said slider (12) of the potentiometer (11) and a second resistor ($AR_1$) connected to the ground of the supplying system, the second dividing bridge (16) including a third resistor ($R_2$) connected to the voltage ($U_{feed}$), and a forth resistor ($AR_2$) connected to the ground of the supplying system, and the value of said second ($AR_1$) and fourth resistors ($AR_2$) of said first and second dividing bridges (14 ; 16) being equal to the product of the value of the first ($R_1$) and third ($R_2$) corresponding resistors by a same multiplying coefficient (A).

2. Simplified supplying system according to claim 1, characterized in that the electronic module (15) is a memory module internal or external to a seat the setting position of which is provided by the motor (10).